# EUROPÄISCHE PATENTANMELDUNG

(11) **EP 1 905 636 A2**
(43) Veröffentlichungstag der Anmeldung: **02.04.2008**
(21) Anmeldenummer: 07113701.2
(22) Anmeldetag: 02.08.2007
(51) Int. Cl.: B60L 3/12

(54) **Verfahren zum Optimieren oder Testen eines Reglers**

(30) Priorität: 27.09.2006 DE 102006046054
(71) Anmelder: SIEMENS AKTIENGESELLSCHAFT, 80333 München (DE)
(72) Erfinder: Breuer, Werner, 80469, München (DE); Rulka, Wolfgang, 81247, München (DE); Weigel, Tim, 81669, München (DE); Yu, Minyi, 81241, München (DE)

(57) **Zusammenfassung**

Die Erfindung betrifft ein Verfahren zum Optimieren oder Testen eines Reglers, der für eine Lokomotive bestimmt ist und insbesondere ein Antriebssteuergerät oder ein Bremssteuergerät ist. Mit "Lokomotive" ist ein beliebiges angetriebenes und gebremstes oder auch nur gebremstes Schienenfahrzeug gemeint. Ein nur gebremstes Schienenfahrzeug ist z. B. ein Waggon. Es werden die Lokomotive kennzeichnende Daten zum Optimieren oder Testen verwendet. Es ist vorgesehen, dass Informationen über den Aufbau der Lokomotive ermittelt werden, dass aus den Informationen ein virtuelles, dreidimensionales Modell der Lokomotive gebildet wird und dass dieses Modell die kennzeichnenden Daten zur Verfügung stellt. Beispielweise werden auch Informationen über das Fahrverhalten der Lokomotive für unterschiedliche Streckenarten und/oder für unterschiedliche Geschwindigkeiten ermittelt. Mit diesen Informationen wird das virtuelle dreidimensionale Modell der Lokomotive spezifiziert, so dass es die kennzeichnenden Daten für die unterschiedlichen Streckenarten und/oder für unterschiedliche Geschwindigkeiten zur Verfügung stellt.

## Beschreibung

Die Erfindung betrifft ein Verfahren zum Optimieren oder Testen eines Reglers, der für eine Lokomotive bestimmt ist und insbesondere ein Antriebssteuergerät oder ein Bremssteuergerät ist, wobei die Lokomotive kennzeichnende Daten zum Optimieren oder Testen verwendet werden.

Mit "Lokomotive" ist ein beliebiges angetriebenes und gebremstes oder auch nur gebremstes Schienenfahrzeug gemeint. Ein nur gebremstes Schienenfahrzeug ist z. B. ein Waggon.

Bisher war es üblich, zum Optimieren oder Testen eines Reglers, insbesondere eines Antriebssteuergerätes oder eines Bremssteuergerätes, eine Testfahrt mit einer Lokomotive durchzuführen. Der Regler wurde dazu in eine Lokomotive eingebaut, die dann auf einer Teststrecke unter unterschiedlichen Bedingungen gefahren werden musste. Testfahrten mit einer Lokomotive sind, weil eine geeignete Strecke zur Verfügung stehen muss, sehr aufwändig. Außerdem ist die Reproduzierbarkeit bei einer Testfahrt nicht gewährleistet.

Es wurden auch schon einfache virtuelle zweidimensionale Modelle einer Lokomotive gebildet.

Zum Testen oder Optimieren eines Bauteiles, das für ein Auto bestimmt ist, sind bereits virtuelle Automodelle gebildet worden, um mit weniger Testfahrten auszukommen. Solche Modelle sind jedoch nicht genau genug, um auf Testfahrten ganz verzichten zu können. Darüber hinaus sind die Anforderungen an ein Schienenfahrzeug mit denen an ein Auto nicht vergleichbar, weil ein Schienenfahrzeug mehrere angetriebene Achsen hat.

Der Erfindung liegt die Aufgabe zugrunde, ein zuverlässiges Verfahren zum Optimieren oder Testen eines Reglers anzugeben, bei dem auf Testfahrten mit einer Lokomotive ganz verzichtet werden kann.

Die Aufgabe wird gemäß der Erfindung dadurch gelöst, dass Informationen über den Aufbau der Lokomotive ermittelt werden, dass aus den Informationen ein virtuelles, dreidimensionales Modell der Lokomotive gebildet wird und dass dieses Modell die kennzeichnenden Daten zur Verfügung stellt.

Der besondere Vorteil liegt darin, dass das Modell dreidimensional ist. Ein solches dreidimensionales Modell ist im Vergleich zu einem zweidimensionalen Modell deutlich besser geeignet, alle erforderlichen Daten über die Lokomotive zur Verfügung zu stellen, die zum Optimieren oder Testen eines Reglers außerhalb einer fahrenden Lokomotive benötigt werden.

Es wird der Vorteil erzielt, dass ohne Testfahrten, also ohne dass eine Lokomotive zur Verfügung gestellt wird, für die außerdem eine Teststrecke freigehalten werden müsste, der Regler, der ein Antriebssteuergerät oder ein Bremssteuergerät sein kann, optimal getestet werden kann. Das führt zu einer deutlichen Kostenreduzierung beim Optimieren oder Testen des Reglers und damit auch bei der Herstellung eines solchen Reglers. Durch die bessere Reproduzierbarkeit der Parameter und Bedingungen und durch die gute reale Abbildung ist mit dem Verfahren nach der Erfindung, insbesondere im Vergleich zu einer Testfahrt, eine langfristige Qualitätssicherung gegeben.

Beispielsweise werden Informationen über das Fahrverhalten der Lokomotive für unterschiedliche Streckenarten und/oder für unterschiedliche Geschwindigkeiten ermittelt. Mit diesen Informationen wird dann das virtuelle, dreidimensionale Modell der Lokomotive spezifiziert, so dass es auch die kennzeichnenden Daten für die unterschiedlichen Streckenarten und/oder für unterschiedliche Geschwindigkeiten zur Verfügung stellt.

Damit wird der besondere Vorteil erzielt, dass nicht nur der Aufbau der Lokomotive, sondern auch das Fahrverhalten der Lokomotive beim Optimieren oder Testen des Reglers Berücksichtigung finden, ohne dass eine aufwändige Testfahrt notwendig wird. Das Fahrverhalten der Lokomotive kann aufgrund ihres Aufbaues oder auch durch eine einzelne Testfahrt ermittelt werden.

Beispielsweise wird als Information über das Fahrverhalten der Lokomotive der Kontakt eines Rades der Lokomotive mit einer Schiene der Strecke ermittelt, wobei die Querschnittsdurchdringung von Rad und Schiene, nicht aber deren Schwingungsverhalten gegeneinander, berücksichtigt wird. Querschnittsdurchdringung meint z. B. die geringfügige Abflachung des Rades durch das Anpressen auf die Schiene.

Es wird der Vorteil erzielt, dass die Datenmenge auf das notwendige Maß reduziert wird. Es hat sich nämlich herausgestellt, dass das Schwingungsverhalten des Rades keine oder nur unbedeutende Auswirkungen auf das Optimieren oder Testen des Reglers haben kann.

Beispielsweise sind die unterschiedlichen Geschwindigkeiten, für welche die Informationen über das Fahrverhalten der Lokomotive ermittelt werden, kleiner als 50 km/h. Es hat sich nämlich herausgestellt, dass bei kleineren Geschwindigkeiten das numerische Bereitstellen der Daten schwieriger als sonst ist. Es ist also erforderlich, gezielt Daten für relativ kleine Geschwindigkeiten zu ermitteln. Diese niedrigen Geschwindigkeiten werden gemäß der Erfindung bei der Modellbildung durch ein besonderes Integrationsverfahren für die Bewegungsgleichungen der Lokomotive über die Zeit erst simulierbar.

Die unterschiedlichen Geschwindigkeiten, für die abschnittsweise konstante Parameter vorgesehen sind, sind beispielsweise 0,01 km/h, 0,1 km/h, 1 km/h und 10 km/h. Durch die um den Faktor 10 unterschiedlichen Geschwindigkeitswerte wird das Fahrverhalten bei niedrigen Geschwindigkeiten besonders vorteilhaft erfasst. Es sind aber auch von diesen konkreten Werten abweichende kleine Geschwindigkeitswerte sinnvoll.

Beispielsweise werden als Informationen über das Fahrverhalten der Lokomotive seitliche Beschleunigungen bei Kurvenfahrten sowie Brems- und Antriebsbeschleunigungen berücksichtigt. Damit werden vorteilhaft alle Möglichkeiten für Beschleunigungen während einer Lokomotivenfahrt erfasst.

Beispielsweise werden als Informationen über das Fahrverhalten der Lokomotive nur für die sich drehenden Radsätze eine nichtlineare Bewegung und für alle anderen Teile der Lokomotive eine lineare Bewegung angenommen.

Es hat sich herausgestellt, dass solche Informationen über das Fahrverhalten für das Optimieren oder Testen des Reglers ausreichen. Für den größten Teil der Lokomotive reicht es folglich aus, dass man kleine Bewegungen gegenüber der momentanen Position auf der Schienenstrecke annimmt. Für die Radsätze muss eine nichtlineare Rechnung angesetzt werden, die die räumliche Position auf der Strecke und die sich nicht linear ändernde Richtung der Kontaktkräfte berücksichtigt. Es werden also nur für die Radsätze die Kurvenfahrten und die Brems- und Antriebsbeschleunigungen berücksichtigt.

Mit diesem vereinfachten Verfahren, das für alle Bauteile der Lokomotive außer den Radsätzen eine lineare Bewegung annimmt, erzielt man ein vereinfachtes, dreidimensionales, spezifiziertes Modell der Lokomotive, das schneller und einfacher zu ermitteln ist und trotzdem gute Informationen zum Optimieren oder Testen des Reglers liefert.

Mit dem Verfahren nach der Erfindung wird insbesondere der Vorteil erzielt, dass ein Regler, der für eine Lokomotive bestimmt ist und insbesondere ein Antriebssteuergerät oder ein Bremssteuergerät ist, ohne eine aufwändige Testfahrt mit einer Lokomotive auf einer Teststrecke zuverlässig optimiert oder getestet werden kann. Dadurch ist eine deutliche Kostenersparnis beim Optimieren oder Testen des Reglers gegeben.

## Patentansprüche

1. Verfahren zum Optimieren oder Testen eines Reglers, der für eine Lokomotive bestimmt ist und insbesondere ein Antriebssteuergerät oder ein Bremssteuergerät ist, wobei die Lokomotive kennzeichnende Daten zum Optimieren oder Testen verwendet werden, **dadurch gekennzeichnet, dass** Informationen über den Aufbau der Lokomotive ermittelt werden, dass aus den Informationen ein virtuelles, dreidimensionales Modell der Lokomotive gebildet wird und dass dieses Modell die kennzeichnenden Daten zur Verfügung stellt.

2. Verfahren nach Anspruch 1, **dadurch gekennzeichnet, dass** Informationen über das Fahrverhalten der Lokomotive für unterschiedliche Streckenarten und/oder für unterschiedliche Geschwindigkeiten ermittelt werden und dass mit diesen Informationen das virtuelle, dreidimensionale Modell der Lokomotive spezifiziert wird, so dass es die kennzeichnenden Daten für die unterschiedlichen Streckenarten und/oder für unterschiedliche Geschwindigkeiten zur Verfügung stellt.

3. Verfahren nach Anspruch 2, **dadurch gekennzeichnet, dass** als Information über das Fahrverhalten der Lokomotive der Kontakt eines Rades der Lokomotive mit einer Schiene der Strecke ermittelt wird, wobei die Querschnittsdurchdringung von Rad und Schiene, nicht aber deren Schwingungsverhalten gegeneinander, berücksichtigt wird.

4. Verfahren nach einem der Ansprüche 2 oder 3, **dadurch gekennzeichnet, dass** die unterschiedlichen Geschwindigkeiten, für welche die Informationen über das Fahrverhalten der Lokomotive ermittelt werden, kleiner als 50 km/h sind.

5. Verfahren nach Anspruch 4, **dadurch gekennzeichnet, dass** die unterschiedlichen Geschwindigkeiten 0,01 km/h, 0,1 km/h, 1 km/h und 10 km/h sind.

6. Verfahren nach einem der Ansprüche 2 bis 5, **dadurch gekennzeichnet, dass** als Informationen über das Fahrverhalten der Lokomotive seitliche Beschleunigungen bei Kurvenfahrten sowie Brems- und Antriebsbeschleunigungen berücksichtigt werden.

7. Verfahren nach einem der Ansprüche 2 bis 6, **dadurch gekennzeichnet, dass** als Informationen über das Fahrverhalten der Lokomotive nur für die sich drehenden Radsätze eine nichtlineare Bewegung und für alle anderen Teile der Lokomotive eine lineare Bewegung angenommen werden.
